# EUROPEAN PATENT SPECIFICATION

(11) **EP 3 491 092 B1**
(45) Date of publication and mention of the grant of the patent: **04.10.2023**
(21) Application number: 17837513.5
(22) Date of filing: 01.08.2017
(51) Int. Cl.: C08B 37/00, C08L 5/00, C08L 5/02, C08B 37/02

(54) **BIOPOLYMERS FOR FUGITIVE DUST CONTROL**
BIOPOLYMERE ZUR KONTROLLE VON FLÜCHTIGEM STAUB
BIOPOLYMÈRES POUR LA LUTTE CONTRE LES POUSSIÈRES FUGITIVES

(30) Priority: 01.08.2016 US 201662369500 P
(43) Date of publication of application: 05.06.2019
(73) Proprietor: Integrity Bio-Chemicals, LLC, Cresson TX 76035 (US)
(72) Inventor: MADDURI, Ashoka V.R., Columbus Georgia 31909 (US); LANDIS, Charles R., The Woodlands Texas 77381 (US); GANDHI, Sanket, Columbus Georgia 31904 (US); BLACKMON, Matthew B., Cresson, Texas (US)
(74) Representative: Stratagem IPM Limited
(86) International application number: PCT/US2017/044836
(87) International publication number: WO 2018/026777

(56) References cited:
- WO-A1-94/27641
- WO-A1-2013/137755
- WO-A1-2015/073292
- WO-A1-2016/160097
- GB-A- 1 391 115
- US-A- 5 359 961
- US-A1- 2002 182 184
- US-A1- 2003 211 963
- US-A1- 2003 224 030
- US-A1- 2010 297 358

## Description

### Reference to Related Applications

This application claims priority to U.S. Provisional Application No. 62/369,500 filed August 1, 2016.

### Field of the Invention

The present invention is directed to the production of polysaccharide derivatives and, in particular, compositions, tools, systems and methods for the dust control in mining, hauling, stock-piling, conveying, sizing, loading and packaging of industrial minerals. The invention also directed to dust and odor control of animal fitter materials.

### Description of the Background

Management of fugitive dust emissions in mining operations has regained importance in light of the recent Occupational Safety and Health Administration (OSHA) rule reducing the permissible exposure limit (PEL) by half. While it is unclear when a similar rule would be introduced by Mine Safety and Health Administration (MSHA), there are new biochemical technologies available to the industry to effectively address the issue. A new functionalized polysaccharide biopolymer is introduced as an alternative to common chloride and sulfate-based chemistries for dust suppression. Dust emissions are found in mining, hauling, stock-piling, conveying, sizing, loading and packaging of Industrial Minerals. Dust control on mine haul roads is one of the most challenging opportunities for the industry to improve driver safety and reduce its water footprint.

Similarly, another application of this invention is to provide bio compatible dust and odor control for animal litter materials. Absorbents, odor regulatory agents, and clumping agents and more chemical additives are used in common animal fitters materials. Commonly used clay based absorbent animal litter materials have issues of dust and odor during its use and controlling it with single bio based product is valuable for animal fitter industry.

### Summary

The present invention is set out in the appended set of claims.

The present invention overcomes the problems and disadvantages associated with current strategies and designs and provide new tools, compositions and methods for dust control.

One embodiment not covered by the claims of the invention comprises dust control processes, such as for example, the dust control process is performed in association with a mining operation, hauling, stock-piling, conveying, sizing, loading and packaging of industrial minerals, dust and/or odor control of animal litter materials or a combination thereof, comprising: providing a composition comprised of a polymer containing one or more amine and/or alkyl moieties; mixing the composition with an aqueous liquid to form a mixture; and applying the mixture to an area that generates dust. Preferably, the polymer comprises a saccharide, a polysaccharide, a derivative of the saccharide or the polysaccharide, or a combination thereof. Preferably the derivative comprises an oxidized saccharide or an oxidized polysaccharide. Also preferably the saccharide, the polysaccharide, the derivative of the saccharide or the polysaccharide, or a combination thereof contains one or more amine, diamine and/or tetra-amine moieties and/or is coupled to one or more alkane, alkene, alkyne, aryl or hydrocarbon moieties. Preferred polymers comprise dextran, levan, guar gum, starch, scleroglucan, welan, xanthan gum, schizophyllan, chitosan, cellulose or a combination thereof. For dextran polymers, a preferred molecular weight is from about 3 kD to about 50,000 kD and/or is coupled to from 0-3 alkylamine moieties per monosaccharide unit wherein 10 percent or more of the monosaccharide units are coupled to alkylamine moieties. Also preferably, the polymer contains one or more primary amine moieties and/or is coupled to one or more primary alkyl moieties. Preferred alkyl moieties include, for example, aldehyde, alkane, alkene, alkyne, aryl moieties, and combinations thereof, the amine moieties are selected from the group consisting of amine, diamine, tetra-amine moieties, and combinations thereof, and preferred alkylamine moieties include, for example, combinations of hydrocarbon/amine moieties. Preferably the compounds and compositions of the invention are not harmful to the environment, do not pollute the environment, are safe for handling by persons, and/or are non-toxic.

Another embodiment not covered by the claims of the invention comprising applying a composition of the disclosure to toxic or otherwise contaminated areas that generate dust. The composition collects the dust from the air or as is otherwise present from the industrial application. The dust now contained within the composition can be collected and safely and properly disposed according to federal, state and/or local regulations.

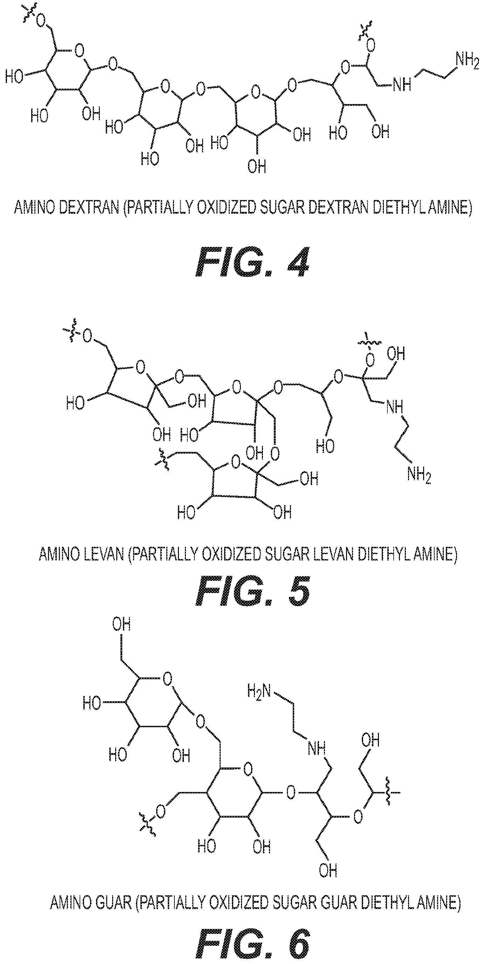

Another embodiment not covered by the claims of the invention comprises polymers that contain one or more amine and/or alkyl moieties. Preferably the polymers comprise natural or oxidized levan, chitosan, guar gum, scleroglucan, welan, xanthan gum, dextran, schizophyllan, cellulose or a combination thereof. Also, preferably the polymers comprise amino dextran, amino levan, amino guar or a combination thereof. Preferably the amino dextran comprises partially oxidized sugar dextran diethyl amine, the amino levan comprises partially oxidized sugar levan diethyl amine, or the amino guar comprises partially oxidized sugar guar diethyl amine. Also preferred are polymers which comprises the chemical structure of Figure 4, Figure 5 or Figure 6, and/or derivatives, salts and functional equivalents thereof.

Another embodiment not covered by the claims of the invention comprises composition that contain the polymer not covered by the claims of the invention plus an aqueous liquid. Preferably the aqueous liquid is water.

Other embodiments and advantages not covered by the claims of the invention are set forth in part in the description, which follows, and in part, may be obvious from this description, or may be learned from the practice of the invention.

### Description of the Figures

Figure 1 Comparison of the polymer of the disclosure treatment and no treatment with traffic passing.
Figure 2 Comparison of the polymer of the disclosure treatment, water treatment and no treatment with traffic passing.
Figure 3 Comparison of the polymer of the disclosure treatment, water treatment and no treatment with traffic passing.
Figure 4 The chemical structure of partially oxidized sugar dextran diethyl amine with intact glycosidic bonds.
Figure 5 The chemical structure of partially oxidized sugar levan diethyl amine with intact glycosidic bonds.
Figure 6 The chemical structure of partially oxidized sugar guar diethyl amine with intact glycosidic bonds.
Figure 7 The chemical structure of ethylamine dextran.
Figure 8 The chemical structure of diethylethanolamine dextran.
Figure 9 The chemical structure of ethylamine levan.
Figure 10 The chemical structure of diethylethanolamine levan.
Figure 11 The chemical structure of ethylamine guar.
Figure 12 The chemical structure of diethylethanolamine guar.

### Description

Drilling, mining and other excavating processes generate a great deal of particles suspended in the air, conventionally referred to as dust. Although dust eventually settles, it is usually necessary to continue work in the dust environment which can be hazardous to both equipment and people. Conventional dust control measures involve spraying the work area with water. Water droplets merge with the dust particles causing the combined form to fall out of the atmosphere more quickly. Although somewhat effective, water evaporates quickly allowing dust to form once again, is simply unavailable in certain areas, or is impractical in cold climates due, for example, to freezing. Also, the amount of water that is typically necessary to control dust can ruin a work area or damage the environment, such as by destroying plant life in the treated areas and/or contaminate the aquifer with run-off.

It was surprisingly discovered that certain polymers could be used to control dust and for long periods of time, especially in work areas such as mining and drilling operations. Polymers such as dextran and other polysaccharides are highly water-soluble molecules with structures that do not change under extremes of temperature and pH. Unlike other dust control substances (e.g., water), there are typically no or minimal issues associated with crystallization of the polymer when used at the low temperatures that exist when working in cold climates. Polymers such as polysaccharides and functionalized polysaccharides and derivatives thereof referred to in the claims of the invention are environmentally safe, nonhazardous to work with and generally biocompatible. Dextran and other polysaccharide molecules are also biodegradable and pose little to no negative impact to plants, animals and other organisms or populations, or on the environment in general, even when used in high concentrations. Polysaccharides and polysaccharide derivatives referred to in the claims of the invention that are useful as functionalized polymers in the claimed method of the invention simply and rapidly degrade in the environment into harmless components. Also, functionalized polysaccharide and functional polysaccharide derivatives (e.g., functionalized polymers containing conservative modifications, deletions and/or substitutions that remain functional) not covered by the claims of the invention are preferably used as non-toxic, low viscosity liquids. As such, they are easily transportable, requiring no special handling as would hazardous materials, and thus readily available directly at the site of use. This ready-to-use availability eliminates time otherwise required for pre-mixing as well as disposal costs such as those associated with saltwater disposal.

Applicant has also surprisingly discovered that functionalized forms of polymers, such as, for example, polysaccharides substituted with amines, alkyls, and/or alkyl amines are especially effective agents at reducing or preventing the creation and accumulation of dust commonly found with mining and drilling operations. Preferred functionalized polymers not covered by the claims of the invention include polymers such as, for example but not limited to polysaccharide, dextran, guar gum, chitosan, scleroglucan, welan, xanthan gum, schizophyllan, levan, starches and cellulose. Preferred functionalized polysaccharide include, for example, polysaccharides substituted or modified with alkyl groups or moieties such as, for example, aldehyde, alkane, alkene, alkyne, aryl, and other hydrocarbons. Examples of substituted polysaccharides not covered by the claims of the invention include, polysaccharides substituted with amine (e.g., primary amine), diamine and tetra-amine groups, polysaccharides substituted with alkyl groups or moieties, and/or polysaccharides substituted with alkylamine moieties. Preferred examples include methyl, ethyl, propyl and isopropyl substituted polysaccharides and/or oxidized polysaccharides, monoaldehyde, dialdehyde, and/or polyaldehyde substituted polysaccharides and/or oxidized polysaccharides, and monamine, diamine, triamine, and polyamine substituted polysaccharides and/or oxidized polysaccharides. Especially preferred examples include dextran (e.g., a branched polyglucan composed of many glucose molecules) in chains of varying lengths. Preferably the polymers are from about 2 kD to about 100,000 kD, more preferably from about 5kD to about 50,00,000 kD, more preferably from about 100 kD to about 10,000 kD, and combinations thereof. Preferably polymers comprise from 1-3 alkyl/amine substitutions per polymer unit, preferably a monosaccharide or glucose unit. Substitutions can range from 1to100 percent of the monosaccharide units of the polysaccharide containing substitutions. The degree and amount of substitution and coupled moieties may depend on the particular moiety or moieties substituted, and may be determined empirically by those skilled in the art. Preferably units that contain moieties may comprise from 5 to 80 percent, preferably from 10 to 50 percent, preferably from 30 to 70 percent, or preferably from 10 to 50 percent. Also preferred are polysaccharides containing multiple different substitutions including but not limited to alkyl and amine moiety substitutions.

One embodiment different from that covered by the claims of the invention is directed to dust control processes comprising: providing a composition comprised of a polymer oxidized, partially oxidized, and/or functionalized to contain one or more amine and/or alkyl moieties in water. The amount of water or another aqueous component in the composition can vary from, for example, 5% to 95% polymer with the remainder comprising water or another available aqueous component. Alternatively, compositions not covered by the claims of the invention may contain polymers plus non-aqueous liquids, such as oils, alcohols, and the like. Preferably the amount of polymer is from 5-75%, more preferably from 7.5-50% polymer, and more preferably from 10-25% polymer. Basically the amount of polymer in the composition can vary depending on the amount of dust control needed, with more polymer providing increased control. Preferably the process involves applying the composition on dust causing areas such as roads, walls and cliffs, mining operations and any operation or industrial areas that generate airborne particles. Application of the compositions referred to in the claims of the invention may be by spraying from a hose or other similar device, or simply flooding the composition in the air or over a surface that generates dust during the operation performed. Also preferably the functionalized polymer comprises a saccharide, a polysaccharide or a derivative thereof.

Preferred polymers comprise, for example, dextran, levan, guar gum, welan, xanthan gum, or a combination thereof, which has a molecular weight of from about 3 kD to about 50,000 kD preferably coupled to from 0-3 alkylamine moieties per monosaccharide unit and 10 to 20 percent, or more than 20 percent of the monosaccharide units contain amine, alkyl and/or alkylamine moieties. Also preferably the polymer contains one or more amine moieties such as, for example, one or more amine, diamine and/or tetra-amine moieties, or one or more alkyl moieties such as, for example, aldehyde, alkane, alkene, alkyne, aryl or other hydrocarbon, or one or more alkyl/amine moieties. Preferably the composition contains no detectable sodium and also that the composition is not harmful to the environment, does not contribute to pollution of the environment, is safe for handling by persons, and is non-toxic.

Another embodiment not covered by the claims of the invention is directed a composition comprising a functionalized polymer, preferably of a polysaccharide, containing primary amine and/or alkyl group substitutions or moieties along the repeating units of the polymer chain. Preferably the polymer comprises one or more of dextran, levan, starch, guar gum, scleroglucan, welan, xanthan gum, chitosan, schizophyllan, cellulose or combinations thereof. Also preferably, the polymer contains substitutions along 1-100 percent of its repeating units. Preferably the primary amine substitutions are monoamines, diamines, tri-amines, tetra-amines moieties or combinations thereof, preferably the alkyl group substitutions are methyl, ethyl, propyl, isopropyl, alkane, alkene, alkyne, aryl or hydrocarbon moieties, or combinations thereof, and also preferably the alkyl moiety substitution comprise from 1 to 3 carbons.

Polymers compositions referred to in the claims of the invention are preferably mixed with, for example, fluids associated with activities at the work site or simply water. The preferred amount of the functionalized polymer of the composition is from about one percent to about 75 percent, or from about 10 percent to about 50 percent, or from about 10 percent to about ninety percent, or from about 25 percent to about 75 percent, or any combination thereof. Preferred concentrations of the polymers referred to in the claims of the invention in an associated fluid at a work site is generally within the preferred ranges and can be tailored to more exact amounts depending on the particular compound utilized. When desired, concentrations can be calculated based on molecular function and/or determined empirically.

Generally, the higher the amount of the polymer in the composition, the longer the period of time in which dust control is achieved. By way of non-limiting examples, a composition comprising 10% functionalized or partially oxidized dextran, guar or levan in water provides dust control over a dirt road for a period of at least two days. A composition comprising 40% functionalized or partially oxidized dextran, guar or levan in water provides dust control over a dirt road for a period of at least two weeks. The amount of polymer of composition for a desired period of time for dust control can be determined empirically and easily by one skilled in the art for most any desired time frame. Dust control compositions referred to in the claims of the invention are preferably utilized at works site regarding mining, excavations, demolition or razing of structures, building, walls and other structures (e.g., using explosives), and similar processes. Dust control compositions referred to in the claims of the invention are especially useful when the dust that might be otherwise generated from, for example, an excavation or a demolition is potentially hazardous to persons and/or equipment. Thus, clean-up of the hazardous substance is made possible and at least made more efficient than conventional processes would otherwise allow. The composition may be applied continuously during a dust generating process, at regular intervals during a dust generating process, and/or as needed during a dust generating process. Alternatively, compositions may be applied to a surface once or periodically as needed such as, for example, on roads or paths that may be dirt, gravel or another dust generating surface. The composition may be applied directly to the source of the dust and/or may be atomized, sprayed, or otherwise emitted into the air to capture dust particles.

Polymer compositions referred to in the claims of the invention preferably function in aqueous (e.g. water-based formulations) (WBF) and hydrocarbon- or oil-based formulations (OBF) as fluids for example, in dispersed, non-dispersed and polymer based fluids. Fluid compositions may include, for example, surfactants, anti-corrosion additives, friction reducers, anti-freeze agents (e.g., CaCl₂, KCl) viscosity enhancers (such as cross-linkers), viscosity reducers (such as breakers), carrier oils (diesel, synthetic olefin oils, and the like), and buffers (acids and bases).

Polymer compositions referred to in the claims of the invention are preferably provided as a liquid, for example, in one cubic meter vessels (referred to as "totes") or in bulk form (e.g., 1,000-5,000 gallon tanks). Hydraulic or electrical pumps transport the liquid to a centralized mixing tank or a fluid stock tank (e.g., as immediate or long-term storage). Tanks are used for mixing and blending of the full range of drilling fluids into a composition described herein. The mixing protocol can vary from one operation to the next with respect to the order of addition of the various agent, compounds and additives as may be required or desired for the particular dust control operation. Preferably the polymer compositions referred to in the claims of the invention are mixed centrally or in partial batches for final blending in tanks (e.g., from 500 to 20,000 gallons) either in compartments or in whole fluid chambers. Tanks may be fabricated to minimize corrosion (e.g., stainless steel, aluminum, PVC) or lined for additional strength and fluid management. Functionalized polymers referred to in the claims of the invention are preferably mixed with a range of make-up waters such as, for example, 100 percent fresh water (potable or non-potable) from local water wells and resources, to blends of produced water from the well ranging from 1-50 percent produced water with fresh water, to a range of treated produced water as make-up water.

Mixing tanks typically feed high pressure pumps designed to deliver a range of fluid viscosities and densities to an area as desired for the particular operation. Fluids are preferably transported with standard pressurized suction lines and pumping units utilized in the industry. Polymer compositions referred to in the claims of the invention as liquids can be utilized with reciprocating pumps, the full range of positive displacement hydraulic pumps, high pressure non-cavitating pumps, and cavitating jet pumps, to name a few. Typical pumping pressures utilized for the particular operation which can be 1,000 psi or much more, such as for example, 1,000 to as much as 10,000 psi or even more, so are not limited to this range. These pumping units can be truck-mounted, skid mounted or fixed land-based units at the work site. Polymer compositions referred to in the claims of the invention containing fluids are then discharged through typical monitoring and control units (which are sometimes referred to as Christmas Trees) through pressurized discharge pipes and hoses used in the industry routinely. Fluids containing polymer compositions referred to in the claims of the invention are preferably pumped and/or sprayed directly to an area surface or can be applied to particular areas as desired.

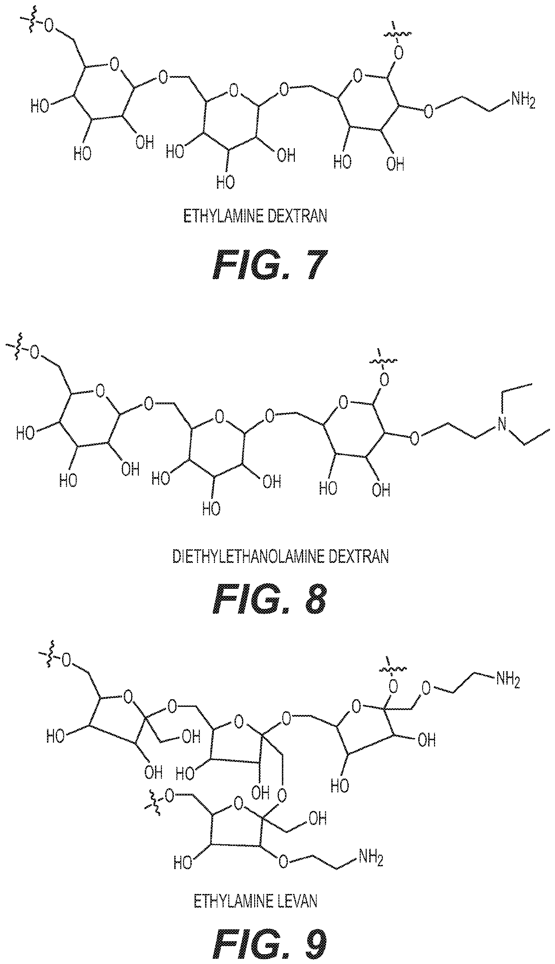

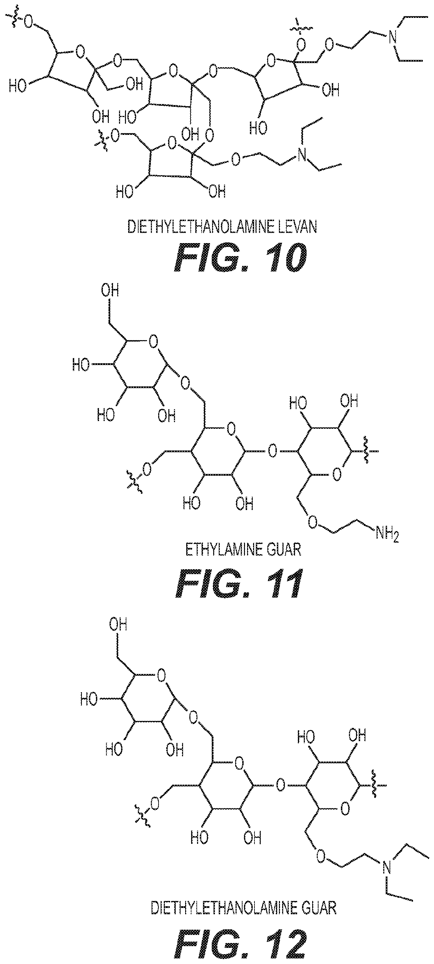

Polymer compositions whether as dry compositions not covered by the claims of the invention or as fluid compositions referred to in the claims are straightforward to create and inexpensively manufactured in large quantities. Processes for manufacture include combining, for example, dextran at an acid or alkaline pH, which may include an amine chloride, for a period of time sufficient to allow for completion of the chemical conversion (e.g., generally minutes to hours) at an elevated temperature (e.g., generally above ambient temperature and less than about 200°C, preferably from about 50-150°C, more preferably about 60°C) and precipitating the substituted polymer with an alcohol. Obtaining a degree or percent of substitutions along the polymer is known or determined empirically by those skilled in the art. Figures 4-6 disclose preferred polymers referred to in the claims of the invention and provides both chemical structures and common chemical names. Figures 7-12 disclose preferred polymers not covered by the claims of the invention and provides both chemical structures and common chemical names. Polymer compositions not covered by the claims of the invention include functional modifications and derivatives of the listed chemical structures including salts thereof. Modifications and/or derivatives include compounds with more or less chemical moieties, substitution and/or side chains, but are otherwise functional according to that not covered by the claims of the invention. Preferred functionalization includes, but is not limited to modification of a polysaccharide and/or a modified polysaccharide molecule (e.g., oxidized, acid or alkaline pH treated) with one or more diethylaminoethyl (DEAE), diethylethanolamine, diethylamine, ethylamine, ethanol amine, and amine moieties.

Polymer compositions not covered by the claims of the invention are preferably liquids, but may be manufactured as semi-solids such as gels and pastes, or solids such as, for example, powders or blocks, which are preferably solubilized in a liquid before use. As these polymers are preferably water soluble, the preferred solvent is water and other water-based or polar substances, but can be non-polar or hydrophobic depending on the particular compound and/or the presence of additional substances within the stabilization composition. Preferable the polymer compositions referred to in the claims of the invention contain no or only small amounts of sodium and/or other single molecule cations (e.g. less than 1,000 ppm, preferably less than 100 ppm, more preferably less than 10 ppm or more preferably less than 1 ppm calcium, potassium and/or sodium). Also preferably the polymer compositions referred to in the claims of the invention contain no ingredients, components or additional chemicals at concentrations that are or that could be harmful to the user, to the environment and/or to any associated materials or equipment of the operation or even nearby equipment that is otherwise unrelated to the specific operation.

Preferably polymer compositions referred to in the claims of the invention are manufactured and distributed in a concentrated form and diluted before use. Concentrations vary depending upon the particular use to which the composition is applied and also the particular the conditions (e.g., percent hydrated or dry). Preferred concentrations of the polymers in a composition include, for example, from 5-100 percent, from 10-90 percent, from 20-80 percent, and from 30-70 percent. Although not typically necessary, compositions not covered by the claims of the invention may include a solvent. Certain preferred concentrations for dust control procedures include, for example, from 0.01-10 percent polymer, from 1-9 percent polymer, from 2-8 percent polymer, and from 3-7 percent polymer.

Additional substances that can be included in the composition with the polymers referred to in the claims of the invention include, for example, surfactants/defoaming agents, detergents, pH control agents, stabilizers, chelators, and/or buffers. Preferred surfactants/defoaming agents include silicone polymer, polysorbate, antifoam A, Tween, or any combination thereof. Preferred detergents include sodium dodecyl sulfate, lithium dodecyl sulfate, sodium taurodeoxycholate, sodium taurocholate, sodium glycocholate, sodium deoxycholate, sodium cholate, sodium alkylbenzene sulfonate, *N*-lauroyl sarcosine, or any combination thereof. Preferred chelators include ethylene glycol tetra acetic acid, hydroxyethylethylenediaminetriacetic acid, diethylene triamine penta acetic acid, *N,N*-bis(carboxymethyl)glycine, ethylenediaminetetraacetic, citrate anhydrous, sodium citrate, calcium citrate, ammonium citrate, ammonium bicitrate, citric acid, diammonium citrate, ferric ammonium citrate, lithium citrate, or any combination thereof. Preferred buffers include tris(hydroxymethyl) aminomethane, citrate, 2-(*N*-morpholino)ethanesulfonic acid, *N,N*-Bis(2-hydroxyethyl)-2 -aminoethanesulfonic acid, 1,3-bis(tris(hydroxymethyl)methyl amino)propane, 4-(2-hydroxyethyl)-1-piperazine ethanesulfonic acid, 3-(*N*-morpholino) propanesulfonic acid, bicarbonate, phosphate, or any combination thereof. The pH of the compositions referred to in the claims of the invention may be any pH at or between pH 1 and pH 14, and is preferably between about pH 4-9, more preferably about pH 5-8 and more preferably about pH 7. Concentrations of preferred additives included in the compositions referred to in the claims of the invention are detergents at from about 0.001 percent to about 0.1 percent (wt./vol.); chelators at from about 0.01 µM to about 1 mM; and buffers at from about 10 µM to about 10 mM.

Also preferably, the polymer compositions referred to in the claims of the invention are effective over a wide temperature range and do not solidify at low temperatures, as compared to ambient temperatures. Preferable polymer compositions referred to in the claims of the invention remain liquid at temperatures at and below 10°C, at and below 5°C, at and below 0°C, at and below minus 5°C, and at and below minus 10°C. More preferably, the polymer compositions referred to in the claims of the invention are useful over a temperature range of minus 10°C and greater. Higher temperatures are not necessarily an issue with dust control, although polymers and compositions referred to in the claims of the invention can be used at ambient temperatures, and temperatures at or greater than 25°C, 30°C, 35°C, 40°C, 45°C, 50°C and even higher.

Embodiments not covered by the claims of the invention may comprise polymers plus stabilizers and other compositions that include, for example, unique nucleic acid and/or amino acid sequences, unique chemical codes, unique particles, unique nanoparticles (e.g., single-walled, double-walled and multi-walled carbon nanotubes), or other identifiable tags can be detected and identified after use such as, for example, in products produced and/or the environment. Detection of unique and identifiable tags allow for tracking and monitoring of present and prior use of the functionalized polymers and compositions not covered by the claims of the invention. Monitoring and tracking can be used for environmental purposes, agricultural purposes, assessing disbursement including patters of disbursement and timing of degradation, and other purposes.

Another embodiment not covered by the claims of the invention is directed to methods of controlling the suspension of particles before, during or after mining, drilling or another excavation procedure. By contacting inventive functionalized polymers and/or compositions before or during excavation, excavation can proceed smoothly and quickly without the need to periodically stop excavation to allow dust to settle, such as to protect equipment or for personal safety. Alternatively, and for example in mining a fluid composition is sprayed over a working area. Alternatively, dust control can be achieved periodically or continuously, thus allowing work to proceed smoothly and without interruption. Contact may comprise spraying a polymer composition over dry soil of a mining area forming a thixotropic paste that does not aerosofize. A preferred method comprises applying the compounds and/or compositions referred to in the claims of the invention over a work area. The exact proportions of polymer portion and the aqueous portion may vary depending on the polymers chosen and can be empirically determined by one skilled in the art. Ratios of polymer to aqueous component include the proportions (aqueous to polymer) 100:1, 50:1, 20:1, 10:1, 5:1, 2:1, 1:2, 1:5, 1:10, 1:20, 1:50, and 1:100, including those ratios in between these ranges. The resulting fluid can have a consistency from molasses to a paste such as, for example, a viscosity of from about 50-10,000 cP, preferably from about 100-500 cP, and more preferable from about 200-300 cP. Alternatively, functionalized polymers and/or compositions referred to in the claims of the invention can be deposited directly onto soils such as excavation site, in concentrated or diluted forms. Preferably the dust control achieved lasts for the entirety of the work period, more preferable for multiple periods, and more preferable for many days.

The following examples illustrate embodiments of the invention, but should not be viewed as limiting the scope of the invention.

### Examples

### Example 1 Dust Control Procedures

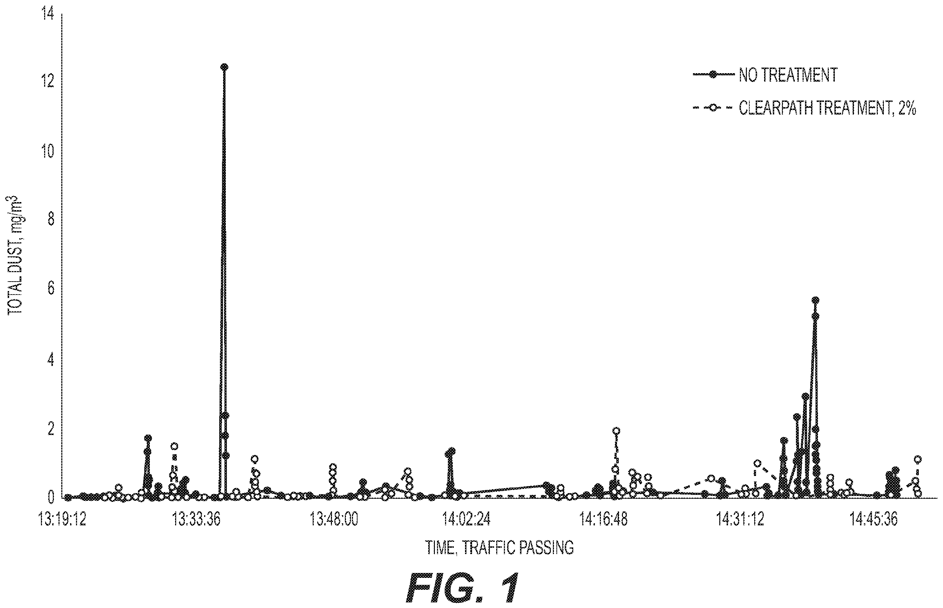

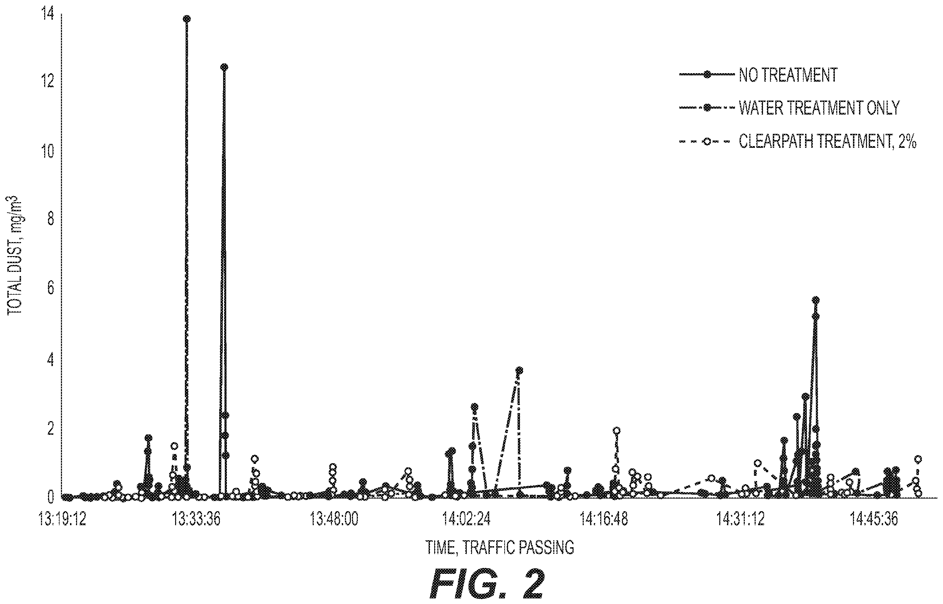

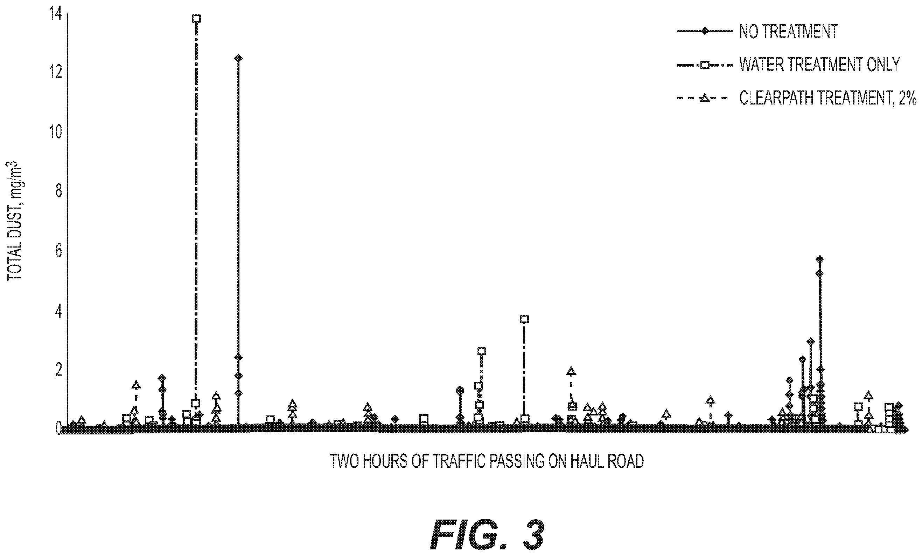

In this study, dust (<74um) was measured from haul roads semi-arid Wyoming from stationary collectors portioned in half mile segments of no-treatment, water-only treatment and treatments with low concentrations of engineered biopolymer. The results show not only visible reductions in dust generation (see Figures 1, 2 and 3), but quantified dust reductions of at least 50%, greater than 50% reductions in daily watering, the ability to reduce watering to a four-day program, and to reduce the treatment rate after the initial seeding of the roads. These results also show that the biopolymer develops efficacy within days of application. The water-based biopolymer adheres and continues to immobilize potential air-borne material. Various forms of selected functionalized polymers were prepared.

### Example 2 Amino Dextran (partially oxidized sugar dextran diethyl amine)

Amino dextran was obtained by reacting dextran with sodium periodate in water at room temperature (preferable from about 20-22°C). Periodate treatment is referred to herein as partial oxidation because periodate does not cleave glycosidic bonds between monomers leaving the polymer length intact, but instead opens ring structures along the polymer (e.g., see Figures 4-6). As shown in these Figures, periodate opens saccharide rings between vicinal diols leaving two aldehyde groups. This reaction was followed by ethylene diamine addition in water at room temperature and final step followed by reduction of formed imine with sodium borohydride in water at room temperature (see Figure 4). The max value with no treatment was 12.441 mg/m³, for water treatment was 13.785 mg/m³, and for ClearPath treatment was 1.978 mg/m³. The lower the number indicates the lesser the dust produced when the vehicle running on the haul road.

### Example 3 Amino Levan (partially oxidized sugar levan diethyl amine)

Amino levan was obtained by reacting levan with sodium periodate in water at room temperature followed by ethylene diamine addition in water at room temperature and final step followed by reduction of formed imine with sodium borohydride in water at room temperature (see Figure 5).

### Example 4 Amino Guar (partially oxidized sugar guar diethyl amine)

Amino guar was obtained by reacting guar with sodium periodate in water at room temperature followed by ethylene diamine addition in water at room temperature and final step followed by reduction of formed imine with sodium borohydride in water at room temperature (see Figure 6).

Other embodiments and uses of the invention will be apparent to those skilled in the art from consideration of the specification and practice of the invention disclosed herein. All references cited herein, including all publications, and all U.S. and foreign patents and patent applications are specifically and entirely referred to. The term comprising, where ever used, is intended to include the terms consisting and consisting essentially of. Furthermore, the terms comprising, including, and containing are not intended to be limiting. It is intended that the specification and examples be considered exemplary only with the true scope of the invention indicated by the following claims.

## Claims

1. A method of dust control in an environment, comprising:
providing a polymer and an aqueous liquid to form a mixture, wherein the polymer comprises partially oxidized dextran, levan, and/or guar gum containing intact glycosidic bonds and functionalized with one or more amino moieties; and
applying the mixture to an area that generates dust.

2. The method of claim 1, wherein the partially oxidized dextran is coupled to from 0-3 alkylamine moieties per monosaccharide unit and 10 percent or more of the monosaccharide units are coupled to alkylamine moieties.

3. The method of claim 1 or claim 2, wherein the composition comprises from about 5-25% polymer and from about 75-95% aqueous liquid.

4. The method of any one of claims 1 to 3, wherein the composition further contains one or more surfactants, defoaming agents, detergents, pH control agents, stabilizers, chelators, buffers. anti-corrosion additives, friction reducers, anti-freeze agents, viscosity enhancers, viscosity reducers, carrier oils, or combinations thereof.

5. The method of any one of the preceding claims, wherein the one or more amino moieties comprises one or more primary, diamine and/or tetra-amine moieties.

6. The method of any one of the preceding claims, wherein the polymer comprises partially oxidized dextran diethyl amine, partially oxidized levan diethyl amine, partially oxidized sugar guar diethyl amine, or a combination thereof.

7. The method of any one of the preceding claims, wherein the environment has a temperature below 0°C or above 30°C.

8. The method of any one of the preceding claims, wherein the area comprises a mining operation, a hauling operation, a stock-piling operation, a conveying operation, a sizing operation, a loading and/or packaging operation for industrial minerals, an animal fitter materials operation, a road, a path, a demolition site, a wall, or a combination thereof.

## Patentansprüche

1. Verfahren zur Staubkontrolle in einer Umgebung, umfassend:
Bereitstellen eines Polymers und einer wässrigen Flüssigkeit, um eine Mischung zu bilden, wobei das Polymer teilweise oxidiertes Dextran, Levan und/oder Guarkernmehl umfasst, das intakte glykosidische Bindungen enthält und mit einer oder mehreren Aminoeinheiten funktionalisiert ist; und
Auftragen der Mischung auf einen Bereich, der Staub erzeugt.

2. Verfahren nach Anspruch 1, wobei das teilweise oxidierte Dextran an 0-3 Alkylamineinheiten pro Monosaccharideinheit gekoppelt ist und 10 Prozent oder mehr der Monosaccharideinheiten an Alkylamineinheiten gekoppelt sind.

3. Verfahren nach Anspruch 1 oder Anspruch 2, wobei die Zusammensetzung etwa 5-25 % Polymer und etwa 75-95 % wässrige Flüssigkeit umfasst.

4. Verfahren nach einem der Ansprüche 1 bis 3, wobei die Zusammensetzung ferner ein oder mehrere Tenside, Entschäumungsmittel, Detergenzien, pH-Kontrollmittel, Stabilisatoren, Chelatoren, Puffer, Korrosionsschutzadditive, Reibungsreduzierer, Frostschutzmittel, Viskositätsverstärker, Viskositätsreduzierer, Trägeröle oder Kombinationen davon enthält.

5. Verfahren nach einem der vorhergehenden Ansprüche, wobei die eine oder mehreren Aminoeinheiten eine oder mehrere primäre Amineinheiten, Diamineinheiten und/oder Tetraamineinheiten umfassen.

6. Verfahren nach einem der vorhergehenden Ansprüche, wobei das Polymer teilweise oxidiertes Dextrandiethylamin, teilweise oxidiertes Levandiethylamin, teilweise oxidiertes Zuckerguardiethylamin oder eine Kombination davon umfasst.

7. Verfahren nach einem der vorhergehenden Ansprüche, wobei die Umgebung eine Temperatur unter 0 °C oder über 30 °C aufweist.

8. Verfahren nach einem der vorhergehenden Ansprüche, wobei der Bereich einen Bergbaubetrieb, einen Transportbetrieb, einen Lagerbetrieb, einen Förderbetrieb, einen Dimensionierungsbetrieb, einen Lade- und/oder Verpackungsbetrieb für Industriemineralien, einen Tierstreumaterialienbetrieb, eine Straße, einen Weg, eine Abbruchstelle, eine Wand oder eine Kombination davon umfasst.

## Revendications

1. Procédé de dépoussiérage dans un environnement, comprenant :
la fourniture d'un polymère et d'un liquide aqueux pour former un mélange, dans lequel le polymère comprend du dextrane, du lévane et/ou de la gomme de guar partiellement oxydés contenant des liaisons glycosidiques intactes et fonctionnalisés avec un ou plusieurs fragments amino ; et
l'application du mélange sur une zone générant de la poussière.

2. Procédé selon la revendication 1, dans lequel le dextrane partiellement oxydé est couplé à de 0 à 3 fragments alkylamine par motif monosaccharide et 10 % ou plus des motifs monosaccharide sont couplés à des fragments alkylamine.

3. Procédé selon la revendication 1 ou la revendication 2, dans lequel la composition comprend d'environ 5 à 25 % de polymère et d'environ 75 à 95 % de liquide aqueux.

4. Procédé selon l'une quelconque des revendications 1 à 3, dans lequel la composition contient en outre un ou plusieurs tensioactifs, agents anti-mousse, détergents, agents de contrôle du pH, stabilisants, chélateurs, tampons, additifs anti-corrosion, réducteurs de friction, agents antigel, amplificateurs de viscosité, réducteurs de viscosité, huiles support ou des combinaisons de ceux-ci.

5. Procédé selon l'une quelconque des revendications précédentes, dans lequel l'un ou plusieurs fragments amino comprennent un ou plusieurs fragments primaires, diamine et/ou tétra-amine.

6. Procédé selon l'une quelconque des revendications précédentes, dans lequel le polymère comprend de la dextrane diéthylamine partiellement oxydée, de la lévane diéthylamine partiellement oxydée, de la guar de sucre diéthylamine partiellement oxydée, ou une combinaison de celles-ci.

7. Procédé selon l'une quelconque des revendications précédentes, dans lequel l'environnement a une température inférieure à 0°C ou supérieure à 30°C.

8. Procédé selon l'une quelconque des revendications précédentes, dans lequel la zone comprend une opération minière, une opération d'extraction, une opération d'exploitation de réserve, une opération de convoyage, une opération de calibrage, une opération de chargement et/ou d'emballage de minéraux industriels, une opération liée à des matériaux de litière d'animaux, une route, un chemin, un site de démolition, un mur ou une combinaison de ceux-ci.
